(19) **Europäisches Patentamt**

**European Patent Office**

**Office européen des brevets**

(11) **EP 0 957 662 B1**

(12) **EUROPÄISCHE PATENTSCHRIFT**

| | |
|---|---|
| (45) Veröffentlichungstag und Bekanntmachung des Hinweises auf die Patenterteilung:<br>**12.11.2003  Patentblatt 2003/46** | (51) Int Cl.[7]: **H05B 39/04**, H02M 7/5383 |

(21) Anmeldenummer: **99107847.8**

(22) Anmeldetag: **20.04.1999**

(54) **Schaltungsanordnung zum Betreiben elektrischer Lampen**

Circuit arrangement for operating electric lamps

Circuit pour alimenter des lampes électriques

(84) Benannte Vertragsstaaten:
**BE DE FR GB IT NL SE**

(30) Priorität: **13.05.1998  DE 19821351**

(43) Veröffentlichungstag der Anmeldung:
**17.11.1999  Patentblatt 1999/46**

(73) Patentinhaber: **Patent-Treuhand-Gesellschaft für elektrische Glühlampen mbH**
**81543 München (DE)**

(72) Erfinder:
- **Franck, Felix, Dr.**
  **80333 München (DE)**
- **Kiermeier, Theodor**
  **81475 München (DE)**

(56) Entgegenhaltungen:
**DE-A- 4 418 886      US-A- 4 709 189**
**US-A- 4 987 347      US-A- 5 498 938**
**US-A- 5 592 367**

## Beschreibung

### Technisches Gebiet

Die Erfindung betrifft eine Schaltungsanordnung zum Betreiben elektrischer Lampen gemäß dem Oberbegriff des Anspruchs 1.

Diese Art von Schaltungsanordnungen werden insbesondere zum Betreiben von Niedervolt-Halogenglühlampen einerseits und Entladungslampen, beispielsweise Leuchtstofflampen, andererseits an einem Wechselspannungsnetz oder einer Gleichspannungsquelle verwendet. Für den Betrieb von Entladungslampen nennt man derartige Schaltungsanordnungen im allgemeinen "elektronische Vorschaltgeräte" (EVG), während für den Betrieb von Niedervolt-Halogenglühlampen die Bezeichnung "elektronischer Transformator" oder "elektronischer Konverter" gebräuchlich ist.

Ein wesentlicher Bestandteil ist ein selbsterregter stromrückgekoppelter Wechselrichter, beispielsweise in Halbbrücken- oder Vollbrückenschaltung, der die niederfrequente Netzspannung oder die - ggf. auch pulsierende - Gleichspannung in eine hochfrequente Spannung zerhackt. Diese wird mit einem auf den Lampentyp abgestimmten Ankoppelschaltkreis an die elektrischen Erfordernisse der zu betreibenden Lampe(n) angepaßt.

Zum Betreiben von Niedervolt-Halogenglühlampen besteht der Ankoppelschaltkreis im wesentlichen aus einem Leistungsübertrager, der die hochfrequente Spannung auf die Niederspannung der zu verwendenden Halogenglühlarnpen transformiert, z.B. 6, 12 oder 24 V. Solche Schaltungsanordnungen werden deshalb auch als elektronische Konverter bezeichnet. Ihre detaillierte Funktionsweise ist beispielsweise in der EP-PS 264 765 und der DE-OS 40 11 742 offenbart.

Zum Betreiben von Entladungslampen, beispielsweise Leuchtstofflampen, folgt den Brückentransistoren eine Vorschaltinduktivität, die den Lampenstrom begrenzt. Zur Zündung der Entladung kann der Ankoppelschaltkreis noch einen parallel zu den Elektroden der Entladungslampe geschalteten Kondensator beinhalten, der in Resonanz mit der Vorschaltinduktivität betrieben wird. Die Funktionsweise solcher elektronischer Vorschaltgeräte ist beispielsweise in der DE-PS 29 41 822 und der DE-OS 38 05 510 näher erläutert.

In beiden Fällen wird der Wechselrichter durch einen rückgekoppelten Anteil des Ausgangsstromes gesteuert. Dadurch ist zum erstmaligen Starten der Schwingung des Wechselrichters (siehe z.B. EP 0 682 464 A1), beispielsweise unmittelbar nach dem Einschalten der Versorgungsspannung, sowie zum Wiederstarten der Schwingung nach jedem Nulldurchgang der Netzspannung (s. z.B. EP 0 682 465 A1 bzw. EP 0 647 084 A1), insbesondere bei elektronischen Konvertern, ein Steuerimpuls erforderlich, um die HF-Schwingung des Wechselrichters zu initiieren. Gewöhnlich enthalten elektronische Konverter bzw. Vorschaltgeräte eine Anschwingschaltung, auch Start- oder Triggergenerator genannt, die diese Aufgabe übernimmt.

Im einfachsten Fall besteht der Triggergenerator im wesentlichen aus einem Ladekondensator, einem Ladewiderstand und einem spannungsabhängigen Schaltelement, beispielsweise einem Diac. Der Ladekondensator wird zunächst über einen Ladewiderstand aufgeladen. Wenn die Spannung des Ladekondensators den Schwellwert des spannungsabhängigen Schaltelements - im Beispiel die Zündspannung des Diacs - erreicht, schaltet das Schaltelement durch und startet die hochfrequente Schwingung des Wechselrichter. Während des Betriebs des Wechselrichters muß hingegen die Erzeugung eines die hochfrequente Schwingung störenden Triggersignals durch das spannungsabhängige Schaltelement verhindert werden.

### Stand der Technik

Aus der EP 0 682 464 A1 ist eine Schaltungsanordnung zum Betreiben elektrischer Lampen mit einem Wechselrichter und einem Triggergenerator bekannt. Der Triggergenerator besteht aus einem Widerstand, einem Ladekondensator, einem Diac und einem steuerbaren Entladewiderstand. Der steuerbare Entladewiderstand verhindert die Entstehung von Triggerimpulsen, während die Halbbrücke schwingt.

Der Ladekondensator des Triggergenerators wird über den seriell geschalteten Widerstand aufgeladen. Der steuerbare Entladewiderstand ist beispielsweise durch einen NPN-Transistor realisiert. Seine Kollektor-Emitter-Strecke ist parallel zum Ladekondensator geschaltet. In einem Ausführungsbeispiel wird diese Kollektor-Emitter-Strecke synchron zur Kollektor-Emitter-Strecke eines Brückentransistors des Wechselrichters durchgeschaltet, d.h. niederohmig, so daß sich der Ladekondensator über die Kollektor-Emitter-Strecke des Entladetransistors entladen kann. Dadurch wird auf einfache Weise zuverlässig verhindert, daß der Steuerspannung für den Brückentransistor ein unerwünschter Triggerimpuls überlagert wird.

Nachteilig bei dieser Art der Triggerimpulserzeugung ist, daß das den Diac ansteuernde Signal relativ langsam auf Änderungen der Versorgungsspannung, beispielsweise beim Einschalten oder Wiedereinschalten nach einer Fehlfunktion der Schaltungsanordnung, reagiert. Insbesondere bei pulsartiger Versorgungsspannung, wie sie gegebenenfalls Brückengleichrichter im Eingang derartiger Schaltungsanordnungen liefern, ist ein rasches Triggern für eine möglichst sinusförmige Netzstromaufnahme, d.h. mit einem möglichst geringen Anteil an Harmonischen, unabdingbar. Der maximal zulässige Anteil an Harmonischen ist durch entsprechende Normen (IEC 1000-3-2) geregelt.

Eine weitere Problematik kann sich bei der Verwendung von sogenannten Phasenan- und abschnittdimmern ergeben. Hier kann unter Umständen ein sogenannter Flickereffekt auftreten. Dabei brennt die am Ausgang der Schaltungsanordnung betriebene Lampe mit zeitlichen Unterbrechungen derart, daß das menschliche Auge die nichtkontinuierliche Lichtabgabe störend wahrnimmt.

Der Hauptgrund für die vorgenannten Probleme ist im Übertragungsverhalten der den Diac ansteuernden Beschaltung zu sehen. Bei der Beschaltung der EP 0 682 464 A1 handelt es sich nämlich um einen RC-Tiefpaß, der eine Signaländerung an seinem Eingang verzögert an seinen Ausgang überträgt. Dadurch wird beispielsweise eine Sprungfunktion am Eingang mehr oder weniger "verschliffen" an den Ausgang übertragen.

Die Patentschrift US-A-5 498 938 offenbart eine Schaltungsanordnung zum Betreiben von Glühlampen. Die Schaltungsanordnung umfasst einen selbstschwingenden und stromrückgekoppelten Wechselrichter in Vollbrückenschaltung. Ferner weist die Schaltungsanordnung einen Triggergenerator auf, der aus einem Widerstand, einem Ladekondensator und einem Diac besteht. Damit entspricht der Triggergenerator im Kern dem in der bereits erwähnten EP 0 682 464 A1 offenbarten Triggergenerator.

**Darstellung der Erfindung**

Es ist Aufgabe der vorliegenden Erfindung, eine Schaltungsanordnung zum Betreiben elektrischer Lampen gemäß dem Oberbegriff des Anspruchs 1 mit einem verbesserten Triggergenerator bereitzustellen.

Diese Aufgabe wird durch die kennzeichnenden Merkmale des Anspruchs 1 gelöst. Besonders vorteilhafte Ausgestaltungen finden sich in den abhängigen Ansprüchen.

Die Erfindung schlägt vor, als Ansteuerschaltung für das spannungsgesteuerte Schaltelement des Triggergenerators einen Hochpaß zu verwenden. Mittels des Hochpasses wird eine Änderung am Eingang der Ansteuerschaltung im Idealfall unmittelbar, d.h. ohne Verzögerung, an den Ausgang der Ansteuerschaltung und folglich zum Schaltelement übertragen. Beim Erreichen der Triggerschwelle legt schließlich das Schaltelement ein Triggersignal an den Wechselrichter, woraufhin dieser das Anschwingen bzw. Wiederanschwingen startet.

Mit dieser Maßnahme werden eine Reihe von Vorteilen erreicht. Für den Fall, daß die Versorgungsspannung eine sinusförmige Wechselspannung oder pulsierende Gleichspannung ist, wird durch die erfindungsgemäße Schaltung die Auslösung des jeweiligen Triggersignals näher zu jedem Nulldurchgang bzw. Nullwert der Versorgungsspannung verschoben. Dadurch wird im Netzbetrieb eine sinusförmigere Netzstromaufnahme erzielt als beim Stand der Technik. Ferner ist in Kombination mit einem Phasenanschnittdimmer auch beim Dimmbetrieb mit kleinen Leistungsaufnahmen ein stabiler, flickerfreier Lampenbetrieb gewährleistet, da die Triggerimpulse nahezu unverzögert auf die sprungartigen Spannungsanstiege der Phasenanschnittdimmer folgen. Für Phasenabschnittdimmer resultiert der Vorteil, daß sich gegenüber dem Stand der Technik eine kleinere untere Grenze der Einstellung des Dimmbetriebs erreichen läßt.

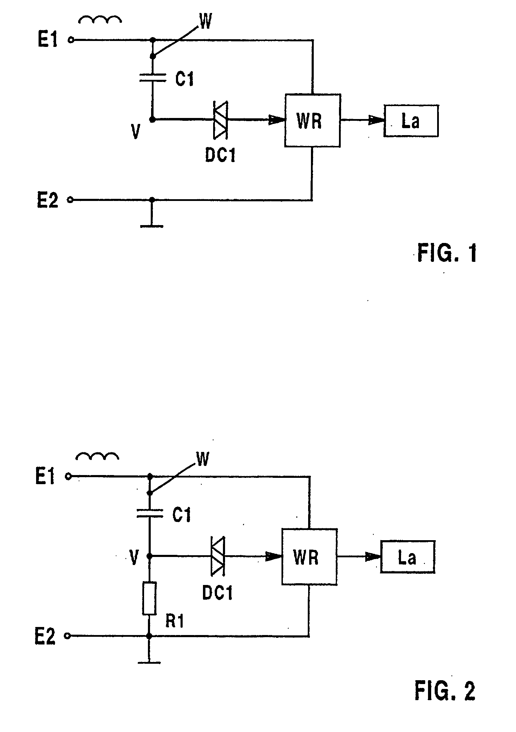

Zur weiteren Erläuterung der Erfindung wird im folgenden auf die Figur 1 Bezug genommen, welche eine erfindungsgemäße Schaltungsanordnung mit einem Wechselrichter WR und daran angeschlossener Last La sowie mit einer besonders einfachen Ausführung der Hochpaßschaltung in schematischer Prinzipdarstellung zeigt. Die Hochpaßschaltung besteht hier aus einem Kondensator C1, der seriell zwischen dem spannungsabhängigen Schaltelement, hier ein Diac DC1, und dem spannungsführenden Eingangspol E1 der Schaltungsanordnung geschaltet ist. Mit anderen Worten ist der Eingangspol W der Hochpaßschaltung mit dem spannungsführenden Eingangspol E1 der Schaltungsanordnung verbunden, und der Ausgangspol V der Hochpaßschaltung ist mit dem spannungsabhängigen Schaltelement verbunden. Der Eingangspol W der Hochpaßschaltung kann prinzipiell auch mit einem anderen zum Triggern geeigneten Potential, das vornehmlich deutliche Flanken in positive Richtung aufweist, verbunden sein. Der zweite Eingangspol E2 der Schaltungsanordnung definiert hier das Bezugspotential. Der Kondensator C1 wirkt als Mitnehmerkondensator, der die Änderungen des Potentials am Eingang W dieses rein differenzierenden Glieds unmittelbar zum spannungsabhängigen Schaltelement DC1 überträgt.

Als weiterer Vorteil - neben der raschen Triggerauslösung - ist die minimale Anzahl an Bauelementen, nämlich nur ein einziges, für die Ansteuerschaltung für das spannungsabhängige Schaltelement hervorzuheben.

Im Unterschied zum Stand der Technik (nicht dargestellt) findet sich hier nämlich kein Ladekondensator C, der sich erst über einen Ladewiderstand R auflädt und mit der Zeitkonstante $\tau = R\,C$ den Schwellwert zum Zünden des Diacs erreichen muß. Dadurch wird der oben beim Stand der Technik erläuterte nachteilige Effekt der verzögerten Triggerauslösung bei der erfindungsgemäßen Schaltung vermieden.

In einer Variante (siehe Figur 2) ist die Ansteuerschaltung aus Figur 1 zu einem RC-Hochpaß ergänzt. Dazu ist ein Widerstand R1 mit dem Verbindungspunkt zwischen Kondensator C1 und Diac DC1 einerseits und dem Bezugspotential E2 der Schaltung andererseits verbunden. Der Ausgang V der Hochpaßschaltung ist hier also durch den Verbindungspunkt zwischen Kondensator C1 und Widerstand R1 gebildet. Der Widerstand R1 bietet einen weiteren Freiheitsgrad, um die Höhe und die Form des Spannungsverlaufs im Verbindungspunkt V und damit das Schaltverhalten des Diacs DC1 zu beeinflussen. Ferner ist diese Variante geeignet für wiederholtes Triggern, da die Anfangsladung im Kondensator C1 über den Widerstand R1 und den Wechselrichter jedesmal wiederhergestellt wird, solange der Wechselrichter arbeitet.

Der Kapazitätswert des Kondensators C1 der Hochpaßschaltung liegt typisch im Bereich von ca. 2,2 nF bis 22 nF.

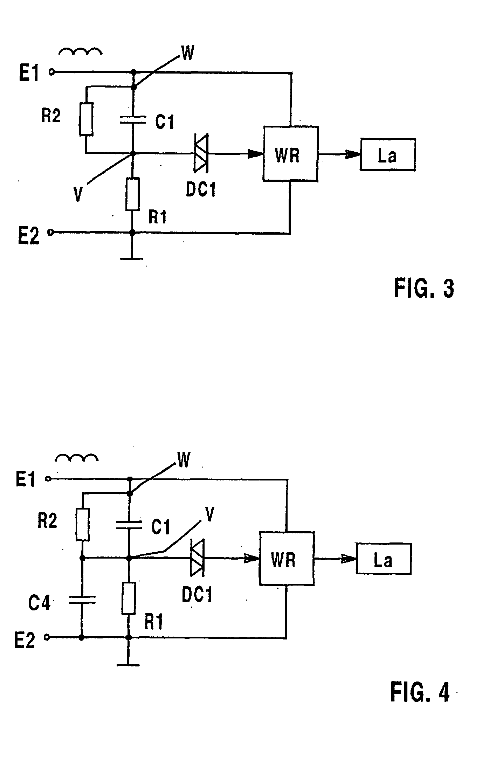

In einer weiteren Variante (siehe Figur 3) ist dem Kondensator C1 mindestens ein weiterer Widerstand R2 parallel geschaltet, d.h. der Widerstand R2 ist einerseits im Eingangspol W der Hochpaßschaltung mit einem ersten Anschluß des Kondensators C1 und andererseits im Verbindungspunkt V - dem Ausgangspol der Hochpaßschaltung - mit dem zweiten Anschluß des Kondensators C1 verbunden. Aus praktischen Erwägungen kann es auch sinnvoll sein, dem Kondensator C1 zwei oder auch mehr Widerstände parallel zu schalten, um die Spannung auf mehr als einen Widerstand aufzuteilen und damit die Spannungsfestigkeit der Beschaltung zu erhöhen. Der mindestens eine weitere Widerstand R2 wirkt zusammen mit dem ersten Widerstand als ohmscher Spannungsteiler, der parallel zum Eingang der Schaltungsanordnung geschaltet ist. Der Mittenabgriff dieses Spannungsteilers entspricht dem Verbindungspunkt V, d.h. dem Ausgangspol der Hochpaßschaltung, und steuert auf diese Weise ebenfalls den Diac an.

Dadurch können auch niederfrequente Spannungskomponenten bzw. Gleichspannungsanteile der Eingangsspannung bei der Ansteuerung des spannungsabhängigen Schaltelements (Diac DC1) genutzt werden. Ein weiterer Aspekt ist, daß auch bei nicht schwingendem Wechselrichter die ohmsche Leitfähigkeit der Schaltungsanordnung erhalten bleibt. Dies ist insbesondere in Kombination mit Phasenabschnittdimmern von Bedeutung, um deren Eigenversorgung zu gewährleisten.

Ein weiterer Vorteil besteht darin, daß durch den ohmschen Spannungsteiler gleichzeitig auch eine Unterspannungserkennung realisiert ist. Damit der Wechselrichter überhaupt gestartet werden kann, muß nämlich die Eingangsspannung der Ansteuerschaltung, d.h. die Spannung zwischen dem Eingangspol W des Hochpasses und dem Bezugspotential, größer sein als die Triggerschwelle des Diacs DC1 multipliziert mit dem Tastverhältnis des ohmschen Spannungsteilers. Diese Eigenschaft ist sehr wichtig für den Betrieb der Schaltungsanordnung an Phasenabschnittdimmern, da dadurch ein unkontrollierter Neustart des Wechselrichters nach Abschnitt der Netzspannung durch den Dimmer wirkungsvoll verhindert wird.

Prinzipiell ist auch hier der erste Widerstand entbehrlich, falls auf den Betrieb mit Phasenabschnittdimmern und auf das Verhindern eines ungewollten Startens bei Unterspannung verzichtet werden kann.

Typischerweise liegt das Verhältnis der Werte des mindestens einen weiteren Widerstands zum ersten Widerstand, also R2 zu R1, im Bereich von ca. 3 bis 7, wobei R2 gegebenenfalls die Summe mehrerer serieller Teilwiderstände bedeutet.

Um zu verhindern, daß das Potential des Verbindungspunktes V nach dem Triggern des Wechselrichters unter das Bezugspotential sinkt, wodurch der nächste Triggerzeitpunkt unkontrolliert verzögert würde, kann zwischen dem Verbindungspunkt V, welcher den Kondensator mit dem spannungsabhängigen Schaltelement verbindet, und dem Bezugspotential der Schaltungsanordnung ein Stromventil, beispielsweise eine Diode, geschaltet sein.

In einer weiteren Variante (siehe Figur 4) ist parallel zum ersten Widerstand R1 ein zweiter Kondensator C4 geschaltet. Er dient zur Abschwächung der Hochpaß-Charakteristik aus Anpassungsgründen und insbesondere auch zur Erhöhung der Robustheit der Schaltungsanordnung gegenüber versorgungsseitigen Überspannungspulsen. Der Wert $C_4$ des zweiten Kondensators C4 ist so bemessen, daß die Ansteuerschaltung ihre Hochpaß-Charakteristik beibehält und nicht zum unerwünschten Tiefpaß entartet. Im vorliegenden Fall - Parallelschaltung eines ohmschen Spannungsteilers (R1, R2) und eines kapazitiven Spannungsteilers (C1, C4) mit gemeinsamem Abgriff (=Verbindungspunkt V) - bedeutet dies, daß das Verhältnis der Kapazität $C_1$ des ersten (Hochpaß-)Kondensators C1 zur Summe $C_1 + C_4$ der Kapazitäten aus beiden Kondensatoren C1, C4, also $C_1/(C_1 + C_4)$, größer ist als das Verhältnis aus dem Wert $R_1$ des ersten Widerstands R1 zur Summe $R_1 + R_2$ der Widerstände R1, R2, also $R_1/(R_1 + R_2)$. Wie sich zeigen läßt, überwiegt dann nämlich bei Signaländerungen an dem Eingang W der Ansteuerschaltung der Einfluß der kapazitiven Komponente an dem Abgriff der beiden gekoppelten Spannungsteiler, d.h. dem Ausgang V der Ansteuerschaltung.

Das oben allgemein anhand eines Wechselrichters mit angeschlossener Last erläuterte Prinzip der Erfindung läßt sich sowohl für elektronische Transformatoren als auch für EVG's sinnvoll verwenden, worauf deshalb jeweils ausdrücklich Schutz beansprucht wird.

Die Schaltungsanordnung kann, insbesondere für Netzbetrieb, noch um eine Gleichrichterschaltung ergänzt sein. Des weiteren kann die Schaltungsanordnung noch ergänzend eine Filterschaltung, welche das Netz in an sich bekannter Weise vor hochfrequenten Störsignalen des Halbbrückenwandlers schützt und beispielsweise aus einer Entstördrossel und einem oder mehreren Kondensatoren besteht, aufweisen. Schließlich kann die Schaltungsanordnung auch noch eine Schutzeinrichtung vor Fehlfunktionen, Überlast bzw. Kurzschluß oder ähnliches aufweisen.

Ferner wird auch Schutz auf ein System zum Betreiben elektrischer Lampen mit der erfindungsgemäßen Schaltungsanordnung und einem Dimmgerät, insbesondere einem Phasenan- oder -abschnittdimmer, beansprucht, da gerade in Kombination mit einem Dimmgerät die spezifischen Vorteile der erfindungsgemäßen Schaltungsanordnung besonders hervortreten.

**Beschreibung der Zeichnungen**

Im folgenden soll die Erfindung anhand einiger Ausführungsbeispiele näher erläutert werden. Es zeigen:

Figur 1 ein Prinzipschaltbild der erfindungsgemäßen Schaltungsanordnung mit einem besonders einfach aufgebauten Triggergenerator,

Figur 2 eine Variante zu Figur 1,

Figur 3 eine weitere Variante zu Figur 1,

Figur 4 noch eine weitere Variante zu Figur 1,

Figur 5 ein vereinfachtes Schaltbild eines erfindungsgemäßen elektronischen Konverters für Niedervolt-Halogenglühlampen,

Figur 6 ein vereinfachtes Schaltbild eines erfindungsgemäßen elektronischen Vorschaltgeräts für Leuchtstofflampen.

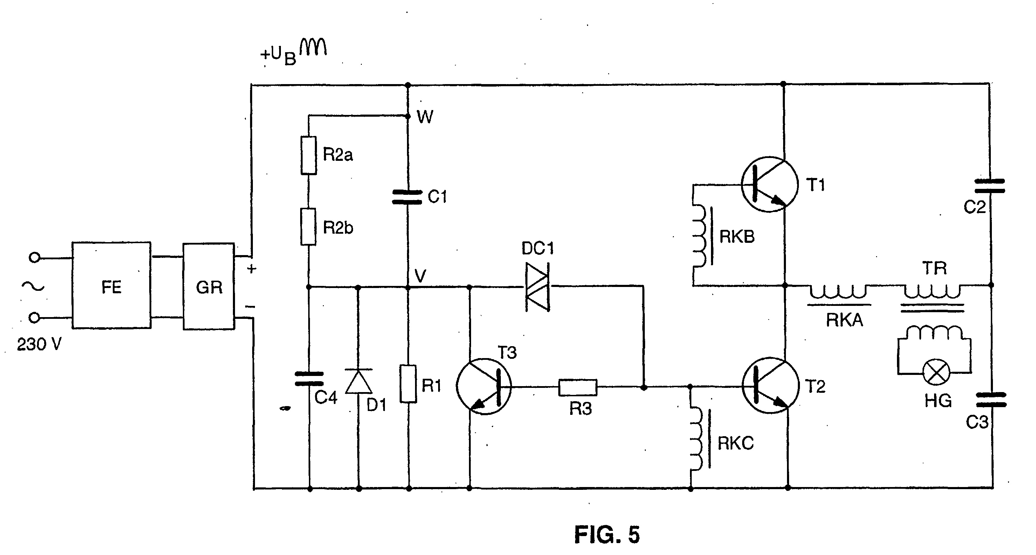

Figur 5 zeigt ein vereinfachtes Schaltbild eines elektronischen Konverters für Niedervolt-Halogenglühlampen. Es beinhaltet die Funktionsblöcke Funkentstörung FE, Gleichrichter GR, selbsterregter stromrückgekoppelter Halbbrückenwandler und Triggergenerator. Der Halbbrückenwandler besteht aus zwei Halbbrückentransistoren T1,T2, zwei Halbbrückenkondensatoren C2, C3, einem Steuertransformator RKA-RKC für die Stromrückkopplung sowie einem Leistungsübertrager TR. Der Triggergenerator wird durch einen Diac DC1 und eine Ansteuerschaltung, bestehend aus einem ersten Widerstand R1 sowie einem seriellen Widerstandspaar R2a und R2b, einem ersten Kondensator C1 und einem zweiten Kondensator C4 sowie einer Diode D1, gebildet. Ein NPN-Transistor T3 mit zugehörigem Basis-Vorwiderstand R3 verhindert die Entstehung von Triggerimpulsen, während die Halbbrücke schwingt.

Im folgenden wird die Funktionsweise der in Figur 5 gezeigten Schaltungsanordnung näher erläutert. Die Funkentstörung FE schützt in an sich bekannter Weise das Netz vor hochfrequenten Störsignalen des Halbbrückenwandlers und besteht beispielsweise aus einer Entstördrossel und einem oder mehreren Kondensatoren (siehe z.B. H.-J. Meyer, "Stromversorgungen für die Praxis", Vogel Buchverlag, Würzburg, 1989, S. 115-116).

Der Gleichrichter GR besteht aus einer Diodenvollbrücke (siehe z.B. W. Hirschmann und A. Hauenstein, "Schaltnetzteile", Siemens AG, 1990, S. 102) und wandelt die Wechselspannung des Netzes in eine pulsierende Gleichspannung $+U_B$. Der negative Pol des Gleichrichters ist im folgenden das Bezugspotential.

Die beiden Brückentransistoren T1, T2 werden abwechselnd durch die Spannungssignale der beiden Sekundärwicklungen RKB bzw. RKC des Steuerübertragers RKA-RKC durchgeschaltet. Sie schließen damit den Stromkreis über die Primärwicklungen von Steuerübertrager RKA-RKC und Leistungsübertrager TR, sowie über die beiden Brückenkondensatoren C2 bzw. C3. Die Sekundärwicklung des Leistungsübertragers TR ist mit einer 12 V Halogenglühlampe verbunden.

Der erste Kondensator C1 und der erste Widerstand R1 der Ansteuerschaltung sind in Serie geschaltet. Das freie Ende des ersten Kondensators C1 ist mit der pulsierenden Gleichspannung $+U_B$ und das freie Ende des ersten Widerstands R1 ist mit dem Bezugspotential verbunden. Der Verbindungspunkt V zwischen erstem Kondensator C1 und erstem Widerstand R1 wirkt somit als Ausgang einer Hochpaßschaltung, welche den Diac DC1 ansteuert.

Dazu ist der Verbindungspunkt V mit dem Diac DC1 verbunden. Parallel zum ersten Widerstand R1 ist die Entladediode D1 geschaltet. Parallel zum ersten Kondensator C1 ist das serielle Widerstandspaar R2a, R2b geschaltet. Das Widerstandspaar R2a, R2b wirkt zusammen mit dem ersten Widerstand R1 als ohmscher Spannungsteiler, der zwischen der pulsierenden Gleichspannung $+U_B$ und dem Bezugspotential geschaltet ist. Der Mittenabgriff dieses ohmschen Spannungsteilers R1 und R2a, R2b entspricht dem Verbindungspunkt V und steuert auf diese Weise ebenfalls den Diac DC1 an. Gleichzeitig wirkt die Serienschaltung von R2a, R2b und R1 als Leitwert und erhöht somit die ohmsche Leitfähigkeit der Schaltung. Dies ist sehr günstig für den Betrieb der Schaltungsanordnung an einem Phasenabschnittsdimmer. Zur Abschwächung der Hochpaß-Charakteristik aus Anpassungsgründen und insbesondere zur Erhöhung der Robustheit der Schaltungsanordnung gegenüber versorgungsseitigen Überspannungspulsen ist parallel zum ersten Widerstand R1 der zweite Kondensator C4 geschaltet.

Parallel zu R1 bzw. D1 ist die Kollektor-Emitter-Strecke des Entladetransistors T3 geschaltet. Diese wird - bis auf eine eventuelle geringe Phasenverschiebung durch unterschiedliche Schaltzeiten der Transistoren T2 und T3 - synchron zur Kollektor-Emitter-Strecke des Brückentransistors T2 durchgeschaltet, d.h. niederohmig, so daß sich über die Kollektor-Emitter-Strecke des Entladetransistors T3 der zweite Kondensator C4 entladen und gleichzeitig der erste Kondensator C1 weiter aufladen kann, so daß das Potential am Verbindungspunkt V zuverlässig unter der Triggerschwelle des Triggerelements DC1 bleibt. Zur Synchronisierung sind die Basisanschlüsse beider Transistoren T2, T3 über den Vorwiderstand R3 miteinander verbunden, so daß sowohl der Brückentransistor T2 als auch der Entladetransistor T3 durch die Steuerspannung der Sekundärwicklung RKC des Steuerübertragers RKA-RKC angesteuert werden. Dadurch wird auf einfache Weise zuverlässig verhindert, daß der Steuerspannung für den Brückentransistor T2 ein unerwünschter Triggerimpuls überlagert wird. Der Widerstand R3 dient zum einen dem Schutz des Transistors T3 vor Überlastung. Zum anderen wird durch seine Dimensionierung der Trigger-Parallelstrom über die Kollektor-Emitter-Strecke des Transistors T3 gezielt so begrenzt, daß über die eigentliche Triggerstrecke, bestehend aus dem Diac DC1 und der Basis-Emitter-Strecke des Halbbrückentransistors T2, eine ausreichende initiale Triggerung des Halbbrückenwandlers gewährleistet ist. Wie gewünscht, wird auf diese Weise ein Triggersignal nur dann erzeugt, wenn die HF-Schwingung der Halbbrücke abbricht, beispielsweise durch - ggf. auch nur vorübergehendes - Abschalten der Netzspannung.

In der Tabelle ist eine Bauteileliste für ein konkretes Ausführungsbeispiel angegeben.

Aus der Bauteileliste ergeben sich folgende, für die Wirkung der Ansteuerschaltung aus Figur 5 als Hochpaß maßgeblichen Werte:

$$\frac{C_1}{C_1 + C_4} = \frac{8{,}2\ \text{nF}}{18{,}2\ \text{nF}} \approx 0{,}45\ \text{und}$$

$$\frac{R_1}{R_1 + R_{2a} + R_{2b}} = \frac{100\ \text{k}\Omega}{460\ \text{k}\Omega} \approx 0{,}217.$$

Daraus ersieht man, daß die im allgemeinen Beschreibungsteil eingeführte Beziehung $\dfrac{C_1}{C_1 + C_4} > \dfrac{R_1}{R_1 + R_{2a} + R_{2b}}$ hier erfüllt ist und folglich die Ansteuerschaltung aus Figur 5 wie gewünscht als Hochpaß wirkt.

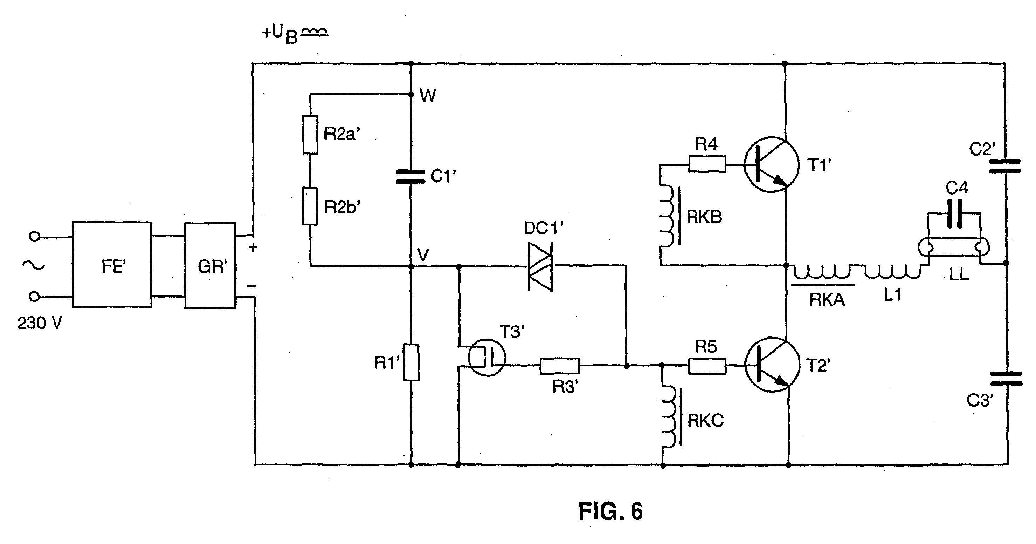

Figur 6 zeigt ein vereinfachtes Schaltbild eines erfindungsgemäßen elektronischen Vorschaltgeräts für Leuchtstofflampen. Die Filterschaltung FE' entspricht im Prinzip der in Figur 1 beschriebenen Filterschaltung FE. Der Gleichrichter GR' enthält neben einer Diodenvollbrücke einen Glättungskondensator. Letzterer begrenzt den Modulationsgrad der gleichgerichteten Versorgungsspannung (Modulationsfrequenz 100 Hz) auf einen Wert, der keine störende Modulation der Lichtstärke der Leuchtstofflampe LL verursacht.

Der Wechselrichter - er besteht hier aus einer stromrückgekoppelten Halbbrücke mit den beiden Brückenkondensatoren T1' und T2', den beiden Brückenkondensatoren C2' und C3' und dem Steuerübertrager RKA'-RKC' - sowie der Triggergenerator, bestehend aus R1', R2a', R2b', C1' und DC1' entsprechen in ihren prinzipiellen Funktionsweisen den bereits in Figur 5 beschriebenen. Hier ist im Unterschied zu Figur 5 auf den zweiten Kondensator der Ansteuerschaltung für den Diac DC1' verzichtet.

Ferner ist im Unterschied zu Figur 5 auf die Entladediode des Triggergenerators verzichtet. Diese ist nämlich wegen des Glättungskondensators im Gleichrichter GR' entbehrlich. Der Glättungskondensator verhindert ein Absinken des Potentials am Verbindungspunkt V unter das Bezugspotential.

Die beiden Sekundärwicklungen RKB',RKC' des Steuerübertragers RKA'-RKC' sind über die Vorwiderstände R4 und R5 mit den Basisanschlüssen der beiden Brückentransistoren T1' bzw. T2' verbunden. Der steuerbare Entladewiderstand ist hier durch den FET T3' realisiert. Es handelt sich hierbei um einen selbstsperrenden n-Kanal MOS-FET vom Anreicherungstyp. Er ist entsprechend dem NPN-Transistor T3 in Figur 4 geschaltet und wird ebenfalls im wesentlichen synchron zum Brückentransistor T2' durch das Steuersignal der Sekundärwicklung RKC' des Steuerübertragers RKA'-RKC' über den Vorwiderstand R2' angesteuert. Die Induktivität L1 stabilisiert den Strom der Leuchtstofflampe LL. Sie bildet mit der Kapazität C4 einen Resonanzkreis. Seine Dimensionierung ist so gewählt, daß er während der Zündphase eine hohe Güte aufweist und seine Resonanzfrequenz in der Nähe der Betriebsfrequenz des Wechselrichters liegt. Dadurch werden die zum Zünden der Leuchtstofflampe LL notwendigen hohen Zündspannungen erreicht.

Die Erfindung ist nicht durch die angegebenen Ausführungsformen beschränkt. Insbesondere können einzelne in den Figuren illustrierte Merkmale auch in anderen Kombinationen erfindungswesentlich sein.

EP 0 957 662 B1

Tabelle:

| Bauteileliste für ein Ausführungsbeispiel gemäß des vereinfachten Schaltbilds aus Figur 5. | |
|---|---|
| R1 | 100 kΩ |
| R2a+R2b | 360 kΩ |
| R3 | 1 kΩ |
| C1 | 8,2 nF; 400 V |
| C2, C3 | 15 nF; 400 V |
| C4 | 10 nF; 63 V |
| D1 | 1N4148 |
| DC1 | Diac 32V |
| RKA-RKC | R 10/6/4; 5:5:1 Wdgen. |
| TR | EF 25/7,5; 63:7 Wdgen. |
| T1, T2 | BUL38D |
| T3 | BC850C |
| HG | Halogenglühlampe 12V, 50W |

**Patentansprüche**

1. Schaltungsanordnung zum Betreiben elektrischer Lampen mit

   - einem selbstschwingenden und stromrückgekoppelten Wechselrichter (WR) in Halb- oder Vollbrückenschaltung,

   - einem mit dem Wechselrichter (WR) verbundenen Ankoppelkreis, der die hochfrequente Spannung des Wechselrichters an die zu betreibende(n) elektrische(n) Lampe(n) (La; HG; LL) anpaßt,

   - einem mit dem Wechselrichter (WR) verbunden Triggergenerator mit

     • einem spannungsabhängigen Schaltelement (DC1; DC1'),

     • einer Ansteuerschaltung für das spannungsabhängige Schaltelement (DC1; DC1'),

     wobei der Ausgangspol (V) der Ansteuerschaltung über das spannungsabhängige Schaltelement (DC1; DC1') mit dem Wechselrichter (WR) verbunden ist, und wobei das spannungsabhängige Schaltelement (DC1; DC1') durchschaltet und dabei die Schwingung des Wechselrichters (WR) startet, sobald das Potential des Verbindungspunktes (V) zwischen Ansteuerschaltung und spannungsabhängigem Schaltelement (DC1; DC1') einen Schwellenwert überschreitet,

     **dadurch gekennzeichnet, daß** die Ansteuerschaltung aus einer Hochpaßschaltung besteht.

2. Schaltungsanordnung nach Anspruch 1, wobei die Hochpaßschaltung einen Kondensator (C1; C1') aufweist und wobei der Eingangspol (W) and der Ausgangspol (V) der Hochpaßschaltung durch den ersten Anschluß bzw. zweiten Anschluß des Kondensators (C1; C1') gebildet sind.

3. Schaltungsanordnung nach Anspruch 2, wobei die Hochpaßschaltung zusätzlich einen Widerstand (R1; R1') aufweist, der mit dem Verbindungspunkt (V) zwischen Kondensator (C1; C1') und spannungsabhängigem Schaltelement (DC1; DC1') einerseits und mit dem Bezugspotential der Schaltung andererseits verbunden ist.

4. Schaltungsanordnung nach Anspruch 2 oder 3, wobei der Kapazitätswert des Kondensators (C1; C1') im Bereich von ca. 2,2 nF bis 22 nF liegt.

7

**EP 0 957 662 B1**

5. Schaltungsanordnung nach Anspruch 2, 3 oder 4, wobei die Hochpaßschaltung zusätzlich mindestens einen weiteren Widerstand (R2a; R2b) aufweist, welcher mindestens eine weitere Widerstand (R2a; R2b) parallel zum Kondensator (C1; C1') geschaltet ist.

6. Schaltungsanordnung nach Anspruch 3 und 5, wobei das Verhältnis der Werte des mindestens einen weiteren Widerstands (R2a; R2b) zum ersten Widerstand (R1) im Bereich von ca. 3 bis 7 liegt.

7. Schaltungsanordnung nach einem der Ansprüche 2 bis 6, wobei die Hochpaßschaltung zusätzlich einen zweiten Kondensator (C4) aufweist, der mit dem Verbindungspunkt (V) zwischen erstem Kondensator (C1) und spannungsabhängigem Schaltelement (DC1) einerseits und mit dem Bezugspotential der Schaltung andererseits verbunden ist und wobei die Bauteile derart dimensioniert sind, daß das Potential am Ausgangspol (V) bezüglich des Eingangspols (W) der Ansteuerschaltung einer Hochpaß-Charakteristik folgt.

8. Schaltungsanordnung nach Anspruch 5 und 7, wobei das Verhältnis der Kapazität $C_1$ des ersten Kondensators (C1) zur Summe $C_1 + C_4$ der Kapazitäten des ersten bzw. zweiten Kondensators (C1, C4), also $C_1/(C_1 + C_4)$, größer ist als das Verhältnis aus dem Wert $R_1$ des ersten Widerstands (R1) zur Summe $R_1 + R_2$ der Werte des ersten bzw. mindestens einen weiteren Widerstands (R1, R2a, R2b), also $R_1/(R_1 + R_2)$, d.h. folgende Beziehung erfüllt ist: $\dfrac{C_1}{C_1 + C_4} > \dfrac{R_1}{R_1 + R_2}$, wobei gegebenenfalls der Wert $R_2$ die Summe der seriellen Einzelwiderstände (R2a, R2b) bezeichnet.

9. Schaltungsanordnung nach einem der Ansprüche 2 bis 8, wobei zwischen dem Verbindungspunkt (V), welcher den ersten Kondensator (C1) mit dem spannungsabhängigen Schaltelement (DC1) verbindet, und dem Bezugspotential der Schaltungsanordnung ein Stromventil, beispielsweise eine Diode (D1), geschaltet ist derart, daß das Potential des Ausgangspols (V) der Hochpaßschaltung nach dem Triggern des Wechselrichters nicht unter das Bezugspotential der Schaltungsanordnung sinkt.

10. Schaltungsanordnung nach einem der vorstehenden Ansprüche, wobei der Eingangspol (W) der Ansteuerschaltung mit dem spannungsführenden Potential (E1, $+U_B$) des Wechselrichters oder mit einem anderen zum Triggern geeigneten Potential, das bevorzugt Flanken in positiver Richtung aufweist, verbunden ist.

11. Schaltungsanordnung nach einem der vorstehenden Ansprüche, wobei das spannungsabhängige Schaltelement des Triggergenerators ein Diac (DC1; DC1'), ein Siliziumbilateralschalter (SBS) oder ein Programmable Unit Transistor (PUT) ist.

12. Schaltungsanordnung nach einem der vorstehenden Ansprüche, wobei die Schaltungsanordnung ein für den Betrieb von Niedervolt-Halogenglühlampen geeigneter elektronischer Konverter oder ein für den Betrieb von Leuchtstofflampen geeignetes elektronisches Vorschaltgerät ist.

13. System zum Betreiben elektrischer Lampen mit einem Phasenausschnittdimmer und einer Schaltungsanordnung nach einem der Ansprüche 1 bis 12.

**Claims**

1. Circuit arrangement for operating electrical lamps with

   - a free-running invertor (WR) with current feedback in a half- or full-bridge circuit,
   - a coupling circuit, which is connected to the invertor (WR) and adapts the high-frequency voltage of the invertor to the electrical lamp(s) (La; HG; LL) to be operated,
   - a trigger generator connected to the invertor (WR), with

     • a voltage-dependent switching element (DC1; DC1'),
     • a drive circuit for the voltage-dependent switching element (DC1; DC1'),

     the output terminal (V) of the drive circuit being connected to the invertor (WR) via the voltage-dependent switching element (DC1; DC1'), and the voltage-dependent switching element (DC1; DC1') turning on and, in the process, the oscillation of the invertor (WR) starting as soon as the potential of the junction point (V) between drive circuit and voltage-dependent switching element (DC1; DC1') exceeds a threshold value,

**characterized in that** the drive circuit comprises a high-pass filter circuit.

2. Circuit arrangement according to Claim 1, in which the high-pass filter circuit has a capacitor (C1; C1'), and in which the input terminal (W) and the output terminal (V) of the high-pass filter circuit are formed by the first terminal and second terminal, respectively, of the capacitor (C1; C1').

3. Circuit arrangement according to Claim 2, in which the high-pass filter circuit additionally has a resistor (R1; R1'), which is connected to the junction point (V) between capacitor (C1; C1') and voltage-dependent switching element (DC1; DC1'), on the one hand, and to the reference-ground potential of the circuit, on the other hand.

4. Circuit arrangement according to Claim 2 or 3, in which the capacitance of the capacitor (C1; C1') lies in the range from approximately 2.2 nF to 22 nF.

5. Circuit arrangement according to Claim 2, 3 or 4, in which the high-pass filter circuit additionally has at least one further resistor (R2a; R2b), which at least one further resistor (R2a; R2b) is connected in parallel with the capacitor (C1; C1').

6. Circuit arrangement according to Claims 3 and 5, in which the ratio of the values of the at least one further resistor (R2a; R2b) to the first resistor (R1) lies in the range from approximately 3 to 7.

7. Circuit arrangement according to one of Claims 2 to 6, in which the high-pass filter circuit additionally has a second capacitor (C4), which is connected to the junction point (V) between first capacitor (C1) and voltage-dependent switching element (DC1), on the one hand, and to the reference-ground potential of the circuit, on the other hand, and in which the components are dimensioned in such a way that the potential at the output terminal (V) follows a high-pass filter characteristic with respect to the input terminal (W) of the drive circuit.

8. Circuit arrangement according to Claims 5 and 7, in which the ratio of the capacitance $C_1$ of the first capacitor (C1) to the sum $C_1 + C_4$ of the capacitances of the first and second capacitor (C1, C4), respectively, that is to say $C_1/(C_1 + C_4)$, is greater than the ratio of the value $R_1$ of the first resistor (R1) to the sum $R_1 + R_2$ of the values of the first and at least one further resistor (R1, R2a, R2b), respectively, that is to say $R_1/(R_1 + R_2)$, i.e. the following relationship is fulfilled: $\dfrac{C_1}{C_1 + C_4} > \dfrac{R_1}{R_1 + R_2}$, where, if appropriate, the value $R_2$ designates the sum of the serial individual resistors (R2a, R2b).

9. Circuit arrangement according to one of Claims 2 to 8, in which a current valve, for example a diode (D1), is connected between the junction point (V), which connects the first capacitor (C1) to the voltage-dependent switching element (DC1), and the reference-ground potential of the circuit arrangement in such a way that the potential of the output terminal (V) of the high-pass filter circuit does not fall below the reference-ground potential of the circuit arrangement after the triggering of the invertor.

10. Circuit arrangement according to one of the preceding claims, in which the input terminal (W) of the drive circuit is connected to the live potential (E1, $+U_B$) of the invertor or to another potential which is suitable for triggering and preferably has edges in the positive direction.

11. Circuit arrangement according to one of the preceding claims, in which the voltage-dependent switching element of the trigger generator is a diac (DC1; DC1'), a silicon bilateral switch (SBS) or a programmable unit transistor (PUT).

12. Circuit arrangement according to one of the preceding claims, in which the circuit arrangement is an electronic converter suitable for the operation of low-voltage incandescent halogen lamps, or an electronic ballast suitable for the operation of fluorescent lamps.

**13.** System for operating electrical lamps with a phase segment control dimmer and a circuit arrangement according to one of Claims 1 to 12.

**Revendications**

**1.** Circuit d'alimentation de lampes électriques comportant

- un onduleur (WR) auto-oscillant à rétroaction de courant dans un montage en demi-pont ou en pont intégral,
- un circuit de couplage qui est relié à l'onduleur (WR) et qui adapte la tension à haute fréquence de l'onduleur à la ou aux lampes électriques à alimenter (La ; HG ; LL),
- un générateur de déclenchement relié à l'onduleur (WR) comportant

  • un élément commutateur (DC1 ; DC1') dépendant de la tension,
  • un circuit de commande pour l'élément commutateur (DC1 ; DC1') dépendant de la tension,

  dans lequel le pôle de sortie (V) du circuit de commande est relié à l'onduleur (WR) par l'intermédiaire de l'élément commutateur (DC1 ; DC1') dépendant de la tension et l'élément commutateur (DC1 ; DC1') dépendant de la tension commute et démarre alors l'oscillation de l'onduleur (WR) dès que le potentiel du point de jonction (V) entre le circuit de commande et l'élément commutateur (DC1 ; DC1') dépendant de la tension dépasse une valeur de seuil,

  **caractérisé par le fait que** le circuit de commande est constitué d'un circuit passe-haut.

**2.** Circuit selon la revendication 1, dans lequel le circuit passe-haut comporte un condensateur (C1 ; C1') et le pôle d'entrée (W) et le pôle de sortie (V) du circuit passe-haut sont formés respectivement par la première borne et la deuxième borne du condensateur (C1 ; C1').

**3.** Circuit selon la revendication 2, dans lequel le circuit passe-haut comporte en plus une résistance (R1 ; R1') qui est reliée d'une part au point de jonction (V) entre le condensateur (C1 ; C1') et l'élément commutateur (DC1 ; DC1') dépendant de la tension et d'autre part au potentiel de référence du circuit.

**4.** Circuit selon la revendication 2 ou 3, dans lequel la valeur capacitive du condensateur (C1 ; C1') est comprise entre 2,2 nF et 22 nF environ.

**5.** Circuit selon la revendication 2, 3 ou 4, dans lequel le circuit passe-haut comporte en plus au moins une autre résistance (R2a ; R2b), laquelle ou lesquelles autres résistances (R2a ; R2b) est ou sont branchées en parallèle avec le condensateur (C1 ; C1').

**6.** Circuit selon les revendications 3 et 5, dans lequel le rapport des valeurs de la ou des autres résistances (R2a ; R2b) à la première résistance (R1) est compris entre 3 et 7 environ.

**7.** Circuit selon l'une des revendications 2 à 6, dans lequel le circuit passe-haut comporte en plus un deuxième condensateur (C4) qui est relié d'une part au point de jonction (V) entre le premier condensateur (C1) et l'élément (DC1) dépendant de la tension et d'autre part au potentiel de référence du circuit et dans lequel les composants sont dimensionnés de telle sorte que le potentiel au pôle de sortie (V) par rapport au pôle d'entrée (W) du circuit de commande obéit à une caractéristique de passe-haut.

**8.** Circuit selon les revendications 5 et 7, dans lequel le rapport de la capacité $C_1$ du premier condensateur (C1) à la somme $C_1 + C_4$ des capacités des premier et deuxième condensateurs (C1, C4), donc $C_1 / (C_1 + C_4)$, est supérieur au rapport de la valeur $R_1$ de la première résistance (R1) à la somme $R_1 + R_2$ des valeurs de la première résistance et de la ou des autres résistances (R1, R2a, R2b), donc $R_1 / (R_1 + R_2)$, c'est-à-dire que la relation suivante $\dfrac{C_1}{C_1 + C_4} > \dfrac{R_1}{R_1 + R_2}$ est vérifiée, la valeur $R_2$ désignant le cas échéant la somme des résistances individuelles en série (R2a, R2b).

9. Circuit selon l'une des revendications 2 à 8, dans lequel une soupape de courant, par exemple une diode (D1), est branchée entre le point de jonction (V), qui relie le premier condensateur (C1) à l'élément commutateur (DC1) dépendant de la tension, et le potentiel de référence du circuit de telle sorte que le potentiel du pôle de sortie (V) du circuit passe-haut après le déclenchement de l'onduleur ne chute pas en dessous du potentiel de référence du circuit.

10. Circuit selon l'une des revendications précédentes, dans lequel le pôle d'entrée (W) du circuit de commande est relié au potentiel conducteur de tension (E1, + $U_B$) de l'onduleur ou à un autre potentiel qui convient au déclenchement et qui présente de préférence des flancs dans la direction positive.

11. Circuit selon l'une des revendications précédentes, dans lequel l'élément commutateur, dépendant de la tension, du générateur de déclenchement est un diac (DC1 ; DC1'), un commutateur bilatéral au silicium (SBS) ou un transistor dit Programmable Unit Transistor (PUT).

12. Circuit selon l'une des revendications précédentes, dans lequel le circuit est un convertisseur électronique convenant à l'alimentation de lampes à incandescence à halogène à basse tension ou un ballast électronique convenant à l'alimentation de tubes fluorescents.

13. Système pour alimenter des lampes électriques avec un variateur à coupe de phase et avec un circuit selon l'une des revendications 1 à 12.

FIG. 1

FIG. 2

FIG. 3

FIG. 4

FIG. 5

EP 0 957 662 B1

FIG. 6